# EUROPEAN PATENT APPLICATION

(11) **EP 3 843 234 A1**
(43) Date of publication of application: **30.06.2021**
(21) Application number: 19945476.0
(22) Date of filing: 05.11.2019
(51) Int. Cl.: H02J 7/00

(54) **METHOD AND DEVICE FOR CATHODE PROTECTION DURING BATTERY CYCLE, AND STORAGE MEDIUM**

(30) Priority: 29.09.2019 CN 201910936150
(71) Applicant: Ningde Amperex Technology Ltd., Ningde City, Fujian 352100 (CN)
(72) Inventor: ZHU, Shan, Fujian 350900 (CN); GUAN, Ting, Fujian 350900 (CN); WU, Fei, Fujian 350900 (CN)
(74) Representative: Icosa
(86) International application number: PCT/CN2019/115659
(87) International publication number: WO 2021/056690

(57) **Abstract**

A cathode protection method in a battery cycle includes the following steps: obtaining cathode polarization impedances of a battery at different states of charge in an n^{th} charge and discharge cycle; obtaining cathode open-circuit voltages of the battery at the different states of charge and a cathode limit potential of the battery; and calculating maximum charge currents of the battery at the different states of charge in the n^{th} charge and discharge cycle based on the cathode open-circuit voltages, the cathode limit potential, and the cathode polarization impedances. This application further provides a cathode protection apparatus and a storage medium. When this application is implemented, a reference limit current for charging the battery may be provided.

## Description

### CROSS-REFERENCE TO RELATED APPLICATIONS

This application claims priority to Chinese Patent Application No. 201910936150.6, filed on September 29, 2019 and entitled "CATHODE PROTECTION METHOD IN BATTERY CYCLE, CATHODE PROTECTION APPARATUS, AND STORAGE MEDIUM", which is incorporated herein by reference in its entirety.

### TECHNICAL FIELD

This application relates to the field of battery technologies, and in particular, to a cathode protection method in a battery cycle, a cathode protection apparatus, and a storage medium.

### BACKGROUND

An existing common charge method is a constant-current constant-voltage charge method or a fast charge method. In both methods, a limit state of a charge current is determined based on whether lithium precipitation occurs at an anode of a battery. From the perspective of the anode, ensuring no lithium precipitation phenomenon in the battery can reduce safety risks and greatly help improve performance of the battery. However, determining a limit current only from the perspective of the anode cannot realize protection of materials such as the cathode and an electrolyte, and may have a relatively great impact on cycle life of the battery.

### SUMMARY

In view of this, a cathode protection method in a battery cycle, a cathode protection apparatus, and a storage medium need to be provided, which can protect a cyclic charge and discharge process of a battery and maintain cycle life of the battery.

An embodiment of this application provides a cathode protection method in a battery cycle, where the method includes: obtaining cathode polarization impedances of a battery at different states of charge (SOC) in an n^{th} charge and discharge cycle, where n is an integer greater than or equal to 0; obtaining cathode open-circuit voltages of the battery at the different states of charge and a cathode limit potential of the battery; and calculating maximum charge currents of the battery at the different states of charge in the n^{th} charge and discharge cycle based on the cathode open-circuit voltages, the cathode limit potential, and the cathode polarization impedances.

Based on some embodiments of this application, the step of obtaining cathode polarization impedances of a battery at different states of charge (SOC) in an n^{th} charge and discharge cycle includes: obtaining anode polarization impedances of the battery at the different states of charge; obtaining battery polarization impedances of the battery at the different states of charge in the n^{th} charge and discharge cycle; and calculating the cathode polarization impedances of the battery at the different states of charge in the n^{th} charge and discharge cycle based on the battery polarization impedances and the anode polarization impedances.

Based on some embodiments of this application, the step of obtaining anode polarization impedances of the battery at the different states of charge includes: obtaining a state of charge (SOC)-open-circuit voltage (OCV) correspondence of an anode of the battery; discharging the battery by using a preset current, and obtaining a discharge curve of the anode of the battery; and obtaining the anode polarization impedances based on the SOC-OCV correspondence of the anode and the discharge curve of the anode.

Based on some embodiments of this application, the step of obtaining the anode polarization impedances based on the SOC-OCV correspondence of the anode and the discharge curve of the anode includes: a first processing step: performing normalization processing on the discharge curve of the anode based on the SOC-OCV correspondence of the anode; a first obtaining step: separately obtaining a anode open-circuit voltage and a anode voltage at a specific state of charge based on the SOC-OCV correspondence of the anode and a normalized discharge curve of the anode; a first calculation step: calculating a anode polarization impedance at the state of charge based on the anode open-circuit voltage and the anode voltage, where the anode polarization impedance is equal to a difference, obtained by subtracting the anode voltage from the anode open-circuit voltage, divided by the preset current; and a first repetition step: changing the state of charge, and repeatedly performing the first obtaining step to the first repetition step to obtain the anode polarization impedances of the battery at the different states of charge.

Based on some embodiments of this application, the step of obtaining battery polarization impedances of the battery at the different states of charge in the n^{th} charge and discharge cycle includes: obtaining a state of charge (SOC)-open-circuit voltage (OCV) correspondence of the battery; discharging the battery by using a preset current, and obtaining a discharge curve of the battery in the n^{th} charge and discharge cycle; and obtaining the battery polarization impedances of the battery at the different states of charge in the n^{th} charge and discharge cycle based on the SOC-OCV correspondence and the discharge curve of the battery.

Based on some embodiments of this application, the step of obtaining the battery polarization impedances of the battery at the different states of charge in the n^{th} charge and discharge cycle based on the SOC-OCV correspondence and the discharge curve of the battery includes: a second processing step: performing normalization processing on the discharge curve of the battery based on the SOC-OCV correspondence of the battery; a second obtaining step: separately obtaining a battery open-circuit voltage and a battery voltage at a specific state of charge based on the SOC-OCV correspondence and a normalized discharge curve of the battery; a second calculation step: calculating a battery polarization impedance based on the battery open-circuit voltage and the battery voltage, where the battery polarization impedance is equal to a difference, obtained by subtracting the battery voltage from the battery open-circuit voltage, divided by the preset current; and a second repetition step: changing the state of charge, and repeatedly performing the second obtaining step to the second repetition step to obtain the battery polarization impedances of the battery at the different states of charge in the n^{th} charge and discharge cycle.

Based on some embodiments of this application, the step of obtaining battery polarization impedances of the battery at the different states of charge in the n^{th} charge and discharge cycle includes: obtaining a state of charge (SOC)-open-circuit voltage (OCV) correspondence of the battery; discharging the battery by using a preset current, and obtaining a discharge curve of the battery in the n^{th} charge and discharge cycle; and obtaining the battery polarization impedances of the battery at the different states of charge in the n^{th} charge and discharge cycle based on the SOC-OCV correspondence and the discharge curve of the battery.

Based on some embodiments of this application, the step of calculating the cathode polarization impedances of the battery at the different states of charge in the n^{th} charge and discharge cycle based on the battery polarization impedance and the anode polarization impedance includes: a first obtaining step: obtaining a anode polarization impedance of the battery at a specific state of charge; a second obtaining step: obtaining a battery polarization impedance of the battery at the state of charge in the n^{th} charge and discharge cycle; a third calculation step: calculating the cathode polarization impedance by subtracting the anode polarization impedance from the battery polarization impedance; and a third repetition step: changing the state of charge, and repeatedly performing the first obtaining step to the third repetition step to obtain the cathode polarization impedances of the battery at the different states of charge in the n^{th} charge and discharge cycle.

Based on some embodiments of this application, the step of calculating maximum charge currents of the battery at the different states of charge in the n^{th} charge and discharge cycle based on the cathode open-circuit voltages, the cathode limit potential, and the cathode polarization impedances includes: obtaining a cathode polarization impedance R_{c} of the battery at a specific state of charge in the n^{th} charge and discharge cycle; obtaining a cathode open-circuit voltage OCVc of the battery at the state of charge; calculating a maximum charge current I of the battery at the state of charge in the n^{th} charge and discharge cycle; and changing the state of charge, and repeatedly performing the foregoing steps to obtain the maximum charge currents of the battery at the different states of charge in the n^{th} charge and discharge cycle.

Based on some embodiments of this application, the maximum charge current I of the battery at the state of charge in the n^{th} charge and discharge cycle is calculated by using the following formula: I = (U_{L} - OCV_{c})/R_{c}, where U_{L} is the cathode limit potential.

An embodiment of this application provides a cathode protection apparatus, where the cathode protection apparatus includes: a battery and a processor, where the processor is configured to perform the foregoing cathode protection method in the battery cycle.

An embodiment of this application provides a storage medium, storing at least one computer instruction, where the instruction is loaded by a processor and is used to perform the foregoing cathode protection method in the battery cycle.

Compared with the prior art, based on the cathode protection method in the battery cycle, the cathode protection apparatus, and the storage medium, the maximum charge current of the battery is calculated, and a limitation condition of the maximum charge current is provided for the battery in the cyclic charge and discharge process, to implement fast charge for the battery while further maintaining cycle life of the battery. This is of relatively great reference significance for long-term use of the battery.

### BRIEF DESCRIPTION OF DRAWINGS

FIG. 1 is a schematic structural diagram of a cathode protection apparatus according to an embodiment of this application.
FIG. 2 is a flowchart of a cathode protection method in a battery cycle according to an embodiment of this application.
FIG. 3 is a curve chart of a relationship between states of charge and open-circuit voltages of a battery.
FIG. 4 is a curve chart of battery discharge.
FIG. 5 is a curve chart of a relationship between states of charge and anode polarization impedances of a battery.
FIG. 6 is a curve chart of a relationship between states of charge and battery polarization impedances of a battery according to this application.
FIG. 7 is a diagram of modules in a cathode protection system according to an embodiment of this application.

**Reference signs of main components:**

| | |
|---|---|
| cathode protection apparatus | 1 |
| cathode protection system | 10 |
| memory | 11 |
| processor | 12 |
| battery | 13 |
| first obtaining module | 101 |
| second obtaining module | 102 |
| calculation module | 103 |

This application will be further described with reference to the accompanying drawings in the following specific embodiments.

### DESCRIPTION OF EMBODIMENTS

To help understand this application, the following provides explanations of some terms used in this application.

To make the objectives, technical solutions, and advantages of this application more comprehensible, the following describes this application in detail with reference to embodiments and accompanying drawings. It should be understood that the specific embodiments described herein are merely used to explain this application but are not intended to limit this application. All other embodiments obtained by a person of ordinary skill in the art based on the embodiments of this application without creative efforts shall fall within the protection scope of this application.

It should be further noted that in this specification, the term "comprise", "include", or any other variant thereof is intended to cover a non-exclusive inclusion, so that a process, a method, an article, or an apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

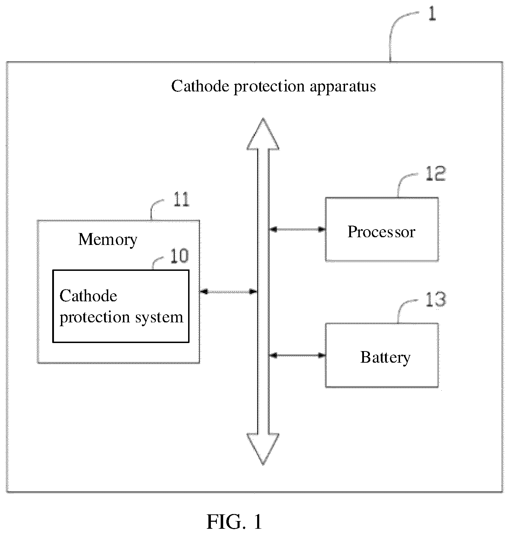

As shown in FIG. 1, a cathode protection system 10 runs in a cathode protection apparatus 1. The cathode protection apparatus 1 includes, but is not limited to, a memory 11, at least one processor 12, and a battery 13. The components can be connected by a bus or directly connected.

In an embodiment, the cathode protection apparatus 1 includes, but is not limited to, at least one processor 12 and a battery 13. The at least one processor 12 and the battery 13 can be connected by a bus or directly connected.

It should be noted that the cathode protection apparatus 1 in FIG. 1 is only used as an example for description. In another embodiment, the cathode protection apparatus 1 may alternatively include more or fewer components, or have a different component configuration. The cathode protection apparatus 1 may be an electric motorcycle, an electric bicycle, an electric car, a mobile phone, a tablet computer, a personal digital assistant, a personal computer, or any other appropriate rechargeable apparatus.

In an embodiment, the battery 13 is a rechargeable battery for supplying power to the cathode protection apparatus 1. For example, the battery 13 may be a lithium-ion battery, a lithium polymer battery, a lithium iron phosphate battery, or the like. The battery 13 includes at least one battery cell (battery cell) for which a cyclic recharge manner may be used. The battery 13 may be logically connected to the processor 12 by a power management system, so that functions such as charge, discharge, and power consumption management are implemented by using the power management system.

Although not shown, the cathode protection apparatus 1 may further include another component such as a wireless fidelity (Wireless Fidelity, Wi-Fi) unit, a Bluetooth unit, a speaker, or the like. Details are not described herein.

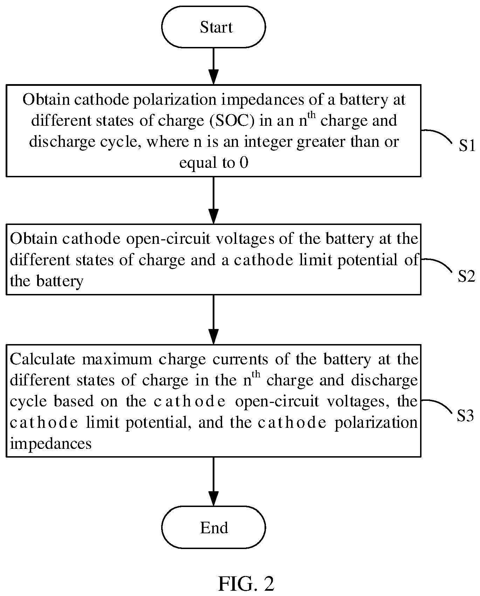

FIG. 2 is a flowchart of a cathode protection method in a battery cycle according to an embodiment of this application. Based on different requirements, a sequence of steps in the flowchart may be changed, and some steps may be omitted. The cathode protection method in the battery cycle may include the following steps.

Step S1: Obtain cathode polarization impedances of a battery at different states of charge (SOC) in an n^{th} charge and discharge cycle, where n is an integer greater than or equal to 0.

In this embodiment, the following method may be used to obtain the cathode polarization impedance of the battery at the different states of charge (SOC) in the n^{th} charge and discharge cycle:
(1) obtaining anode polarization impedances of the battery at the different states of charge;
(2) obtaining battery polarization impedances of the battery at the different states of charge in the n^{th} charge and discharge cycle; and
(3) calculating the cathode polarization impedances of the battery at the different states of charge in the n^{th} charge and discharge cycle based on the battery polarization impedances and the anode polarization impedances.

In this embodiment, the method of obtaining anode polarization impedances of the battery at the different states of charge includes: obtaining a state of charge (SOC)-open-circuit voltage (OCV) correspondence of an anode of the battery; discharging the battery by using a preset current, and obtaining a discharge curve of the anode of the battery; and obtaining the anode polarization impedances based on the SOC-OCV correspondence of the anode and the discharge curve of the anode.

In another embodiment, anode polarization impedances of a fresh battery at different states of charge may also be obtained as the anode polarization impedances of the battery at the different states of charge (SOC). A change of the anode polarization impedance during a cyclic use process of the battery is smaller than a change of the cathode polarization impedance, and an increase of the battery polarization impedance mainly occurs at a cathode. Therefore, to facilitate obtaining of the anode polarization impedances of the battery at the different states of charge (SOC), a triple-electrode monitoring method is used to obtain the anode polarization impedances of the fresh battery at the different states of charge as the anode polarization impedances of the battery at the different states of charge (SOC). It should be noted that the fresh battery is a battery that has not been cyclically used after being delivered from the factory, or a battery that has been cyclically charged or discharged for less than a preset quantity of times (such as 10 times or another quantity of times) after being delivered from the factory. A battery parameter (such as the anode polarization impedance) is obtained by using the fresh battery, and a maximum charge current of the battery with a longest lifespan in a charge process can be obtained through calculation based on the obtained parameter. The method of obtaining the anode polarization impedances of the fresh battery at the different states of charge is the same as the method of obtaining the anode polarization impedances of the battery at the different states of charge. Details are not described herein again.

It should be noted that when n is less than a specific number (such as 10 or 20), the battery can be understood as the fresh battery.

In an embodiment, the following method may be used to obtain the state of charge (SOC)-open-circuit voltage (OCV) correspondence of the anode of the battery.

(1) Fetch a battery, charge the battery to a fully charged state, and then discharge the battery to an empty state by using a first preset current, where in this embodiment, the first preset current is a current with a small current rate, such as 0.01 C, or may be another current.

(2) Record a voltage and a capacity change of the battery in the foregoing charge and discharge process, and monitor a cathode potential and a anode potential of the battery by using three electrodes.

(3) Obtain the state of charge of the battery in the discharge process. For example, a maximum discharge capacity of the battery is used as a full load capacity of the battery, and a capacity value of the battery that changes with time in the discharge process is divided by the full load capacity to obtain the state of charge of the battery in the discharge process.

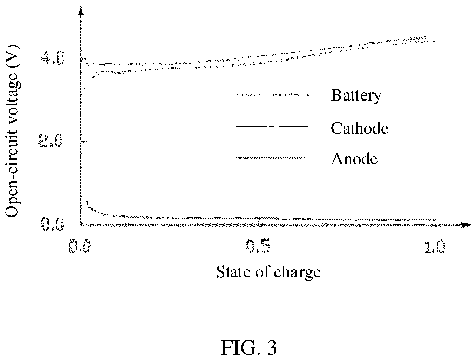

(4) As shown in FIG. 3, separately establish correspondences between voltages, cathode potentials, and anode potentials of the battery at the different states of charge in the discharge process to separately obtain an SOC-OCV curve of the battery, an SOC-OCV curve of the cathode, and an SOC-OCV curve of the anode. In another embodiment, these SOC-OCV curves may also be obtained by using another discharge method.

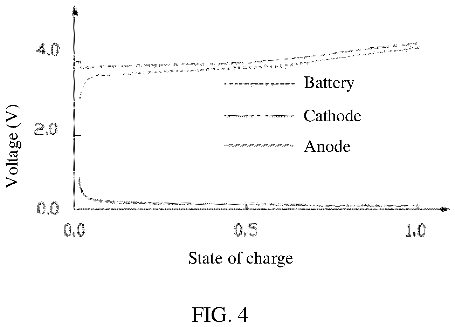

In an embodiment, the following method may be used to obtain a discharge curve of the anode of the battery.
(1) Fetch a battery and charge the battery to a fully charged state.
(2) Place the battery for 30 minutes, record a voltage of the battery after placement, and monitor a cathode potential and an anode potential of the battery by using the three electrodes.
(3) Discharge the battery to an empty state by using a second preset current, record changes of a voltage, a discharge capacity, a cathode potential, and an anode potential of the battery in a discharge process, where the second preset current may be 0.2 C or 0.5 C, or may be another current.
(4) Place the battery at the empty state for 30 minutes, record a voltage of the battery after placement, and monitor a cathode potential and an anode potential of the battery by using the three electrodes.
(5) As shown in FIG. 4, establish a correspondence between the battery voltage and the capacity or the SOC, a correspondence between the cathode potential and the capacity or the SOC, and a correspondence between the anode potential and the capacity or the SOC in the discharge process to obtain a discharge curve of the battery, a discharge curve of the cathode, and a discharge curve of the anode.

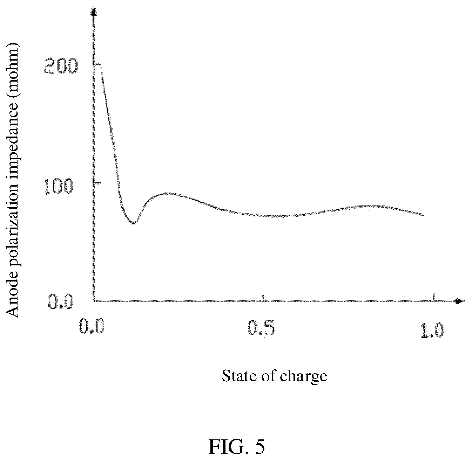

In this embodiment, the method of obtaining the anode polarization impedances based on the SOC-OCV correspondence of the anode and the discharge curve of the anode includes:
(a1) Perform normalization processing on the discharge curve of the anode based on the SOC-OCV correspondence of the anode.
(b1) Separately obtain an anode open-circuit voltage and an anode voltage at a specific state of charge based on the SOC-OCV correspondence of the anode and a normalized discharge curve of the anode.
(c1) Calculate an anode polarization impedance at the state of charge based on the anode open-circuit voltage and the anode voltage, where the anode polarization impedance is equal to a difference, obtained by subtracting the anode voltage from the anode open-circuit voltage, divided by the preset current (that is, the second preset current).
(d1) As shown in FIG. 5, change the state of charge, and repeatedly perform (a1) to (d1) to obtain the anode polarization impedances of the battery at the different states of charge.

In this embodiment, the step of obtaining battery polarization impedances of the battery at the different states of charge in the n^{th} charge and discharge cycle includes:
(1) Obtain a state of charge (SOC)-open-circuit voltage (OCV) correspondence of the battery. It should be noted that when a battery system is determined, the SOC-OCV correspondence of the battery usually remains unchanged. Even if the battery has been cyclically charged and discharged for n times, the SOC-OCV correspondence of the battery does not change. The method of obtaining the state of charge (SOC)-open-circuit voltage (OCV) correspondence of the battery is described above. Details are not described herein again.
(2) Discharge the battery by using a preset current, and obtain a discharge curve of the battery in the n^{th} charge and discharge cycle. It should be noted that the preset current is the second preset current mentioned above.
(3) Obtain the battery polarization impedances of the battery at the different states of charge in the n^{th} charge and discharge cycle based on the SOC-OCV correspondence and the discharge curve of the battery.

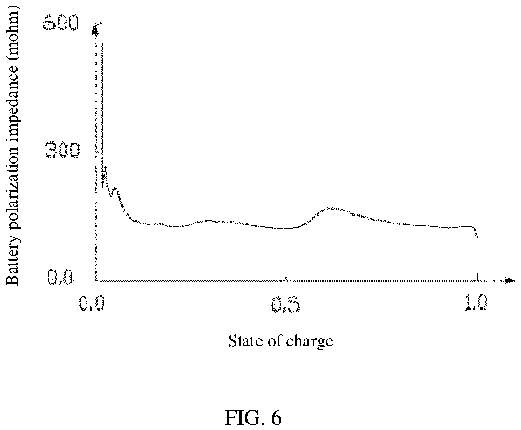

Specifically, the battery polarization impedances of the battery at the different states of charge in the n^{th} charge and discharge cycle are obtained by using the following method.
(a2) Perform normalization processing on the discharge curve of the battery based on the SOC-OCV correspondence of the battery.
(b2) Separately obtain a battery open-circuit voltage and a battery voltage at a specific state of charge based on the SOC-OCV correspondence and a normalized discharge curve of the battery.
(c2) Calculate a battery polarization impedance based on the battery open-circuit voltage and the battery voltage, where the battery polarization impedance is equal to a difference, obtained by subtracting the battery voltage from the battery open-circuit voltage, divided by the preset current (that is, the second preset current).
(d2) As shown in FIG. 6, change the state of charge, and repeatedly perform (a2) to (d2) to obtain the battery polarization impedances of the battery at the different states of charge in the n^{th} charge and discharge cycle.

In this embodiment, the cathode polarization impedance of the battery is equal to the anode polarization impedance subtracted from the battery polarization impedance.

Specifically, the cathode polarization impedances of the battery at the different states of charge in the n^{th} charge and discharge cycle are obtained by using the following method.
(a3) Obtain an anode polarization impedance of the battery at a specific state of charge.
(b3) Obtain a battery polarization impedance of the battery at the state of charge in the n^{th} charge and discharge cycle.
(c3) Calculate a cathode polarization impedance by subtracting the anode polarization impedance from the battery polarization impedance.
(d3) Change the state of charge, and repeatedly perform (a3) to (d3) to obtain the cathode polarization impedances of the battery at the different states of charge in the n^{th} charge and discharge cycle.

Step S2: Obtain cathode open-circuit voltages of the battery at the different states of charge and a cathode limit potential of the battery.

In this embodiment, cathode open-circuit voltages of the battery at the different states of charge may be obtained based on the foregoing obtained SOC-OCV curve of the cathode of the battery.

In an embodiment, the cathode limit potential of the battery is determined by a material characteristic of the battery. It may be understood that the cathode limit potential is related to material characteristics of the cathode, an electrolyte, and the like of the battery, which can not only ensure stability of the material of the cathode, but also can control a decomposition amount of the electrolyte, a side reaction between the cathode and the electrolyte, and the like. Specifically, CV scanning may be performed based on different materials (the material of the cathode, electrolyte, and the like) to obtain a potential corresponding to an oxidation reaction of the material, and the potential is used as the cathode limit potential of the battery. Alternatively, a cyclic charge and discharge test is performed on the battery by using different limit potentials separately, to ensure that capacity attenuation of a battery cell of the battery is within an acceptable range (for example, at an ambient temperature of 45°C, capacity attenuation of the battery is less than 20% after 500 cycles) after cyclic charge and discharge, thereby determining a limit potential of the battery in a cyclic charge and discharge process.

Step S3: Calculate maximum charge currents of the battery at the different states of charge in the n^{th} charge and discharge cycle based on the cathode open-circuit voltages, the cathode limit potential, and the cathode polarization impedances.

In this embodiment, the maximum charge current of the battery is equal to a difference, obtained by subtracting the cathode open-circuit voltage from the cathode limit voltage, divided by the cathode polarization impedance.

Specifically, the step of calculating maximum charge currents of the battery at the different states of charge in the n^{th} charge and discharge cycle includes: obtaining a cathode polarization impedance R_{c} of the battery at a specific state of charge in the n^{th} charge and discharge cycle; obtaining a cathode open-circuit voltage OCV_{c} of the battery at the state of charge; calculating a maximum charge current I of the battery at the state of charge in the n^{th} charge and discharge cycle based on I = (U_{L} - OCV_{c})/R_{c}, where U_{L} is the cathode limit potential; and changing the state of charge, and repeatedly performing the foregoing steps to obtain the permitted maximum charge currents of the battery at the different states of charge in the n^{th} charge and discharge cycle.

Through the foregoing steps S1 to S3, the maximum charge current of the battery is calculated, and a limitation condition of a limit charge current is provided for the battery in the cyclic charge and discharge process, to ensure fast charge while maintaining cycle life of the battery. This is of great significance for long-term use of the battery.

It should be noted that, in each charge process of a preset quantity of charge and discharge cycles following the n^{th} cycle, a charge current of the battery in each charge process may be determined based on the maximum charge current, and the battery is charged based on the determined charge current. Specifically, in the battery charge process, the maximum charge current is used as the limit current for protecting the cathode of the battery, a charge current of the battery in each charge process of the preset quantity of charge and discharge cycles following the n^{th} cycle is determined based on the maximum charge current, and then the battery is charged based on the determined charge current. In this way, the cathode of the battery is protected, and the battery can also be protected and the cycle life of the battery can be prolonged. The preset quantity of charge and discharge cycles may be 50 charge and discharge cycles or another quantity of cycles, depending on a specific condition. It may be understood that for the current for charging the battery in the charge and discharge cycles following the n^{th} cycle, in addition to the cathode limit current, the anode limit current also needs to be considered. Therefore, in this application, the maximum charge current may be used as a reference factor for determining the charge current of the battery in the charge and discharge cycles following the n^{th} cycle. In this way, the cathode protection method for the battery provided in this application can be combined with various other fast cathode protection methods, and a limitation condition of the limit charge current is provided from the perspective of the cathode protection for the battery, so that the cycle life of the battery can be maintained in the fast charge process of the battery and the battery is protected.

It should be noted that an impedance of the battery increases in each charge and discharge cycle. Therefore, in each charge process following the n^{th} cycle, if the battery is charged always by using the determined charge current, the cathode of the battery may not be protected. However, a quantity of charge of the battery following the n^{th} cycle may be limited, to protect the cathode of the battery when the battery is charged by using the determined charge current. For example, a limitation is set to charge the battery based on the determined charge current in 50 charge processes of the battery following the n^{th} cycle. After 50 charge and discharge cycles, the charge current needs to be determined based on a recalculated maximum charge current, and then the battery is charged by using the determined charge current.

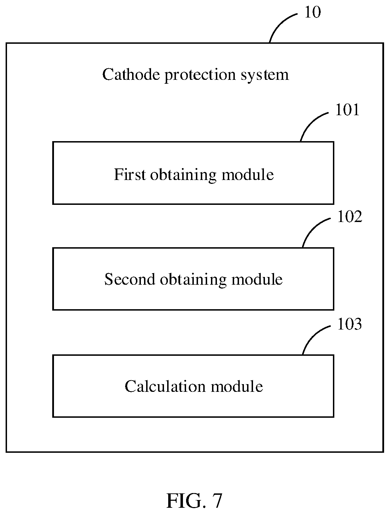

Referring to FIG. 7, in an embodiment, a cathode protection system 10 may be divided into one or more modules, and the one or more modules are stored in a memory 11 and are performed by at least one processor (one processor 12 in this embodiment) to complete this application. The one or more modules may be a series of computer program instruction segments capable of completing specific functions, and the instruction segments are used to describe an execution process of the cathode protection system 10 in the cathode protection apparatus 1. For example, the cathode protection system 10 may be divided into a first obtaining module 101, a second obtaining module 102, and a calculation module 103 in FIG. 7.

In another embodiment, the cathode protection system 10 may be divided into one or more modules, and the one or more modules are stored in the processor 12 and are performed by at least one processor (one processor 12 in this embodiment) to complete this application. The one or more modules may be a series of computer program instruction segments capable of completing specific functions, and the instruction segments are used to describe an execution process of the cathode protection system 10 in the cathode protection apparatus 1. For example, the cathode protection system 10 may be divided into a first obtaining module 101, a second obtaining module 102, and a calculation module 103 in FIG. 7.

Specifically, the first obtaining module 101 is configured to obtain cathode polarization impedances of a battery at different states of charge (SOC) in an n^{th} charge and discharge cycle, where n is an integer greater than or equal to 0. The second obtaining module 102 is configured to obtain cathode open-circuit voltages of the battery at the different states of charge and a cathode limit potential of the battery. The calculation module 103 is configured to calculate maximum charge currents of the battery at the different states of charge in the n^{th} charge and discharge cycle based on the cathode open-circuit voltages, the cathode limit potential, and the cathode polarization impedances. The cathode protection system 10 in this application can not only ensure fast charge of the battery, but also can relatively prolong the cycle life of the battery. For details, refer to the embodiments of the foregoing cathode protection method in the battery cycle. Details are not described herein again.

In this embodiment, the memory 11 may be an internal memory of the cathode protection apparatus 1, that is, a memory built in the cathode protection apparatus 1. In another embodiment, the memory 11 may alternatively be an external memory of the cathode protection apparatus 1, that is, a memory externally connected to the cathode protection apparatus 1.

In some embodiments, the memory 11 is configured to store program code and various data. For example, the memory 11 is configured to store program code of the cathode protection system 10 installed in the cathode protection apparatus 1, and complete automatic high-speed access of the program and the data during operation of the cathode protection apparatus 1. For example, in this embodiment, the cathode protection system 10 is used to obtain, by using the foregoing method, the maximum charge current for protecting the cathode in the battery charge process.

In some embodiments, the memory 11 may include a random access memory, or may further include a non-volatile memory, for example, a hard disk, a memory, a plug-in hard disk, a smart media card (SMC), a secure digital (SD) card, a flash card, at least one magnetic disk storage device, a flash memory device, or other volatile solid-state storage devices.

In an embodiment, the processor 12 may be a central processing unit (CPU), or may be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor 12 may be any other conventional processor or the like.

When the module in the cathode protection system 10 is implemented in a form of a software functional unit and sold or used as an independent product, the module may be stored in a computer-readable storage medium. Based on such understanding, some or all of the processes for implementing the methods in the embodiments of this application may be completed by related hardware instructed by a computer program. The computer program may be stored in a non-volatile readable storage medium. When the computer program is executed by the processor, the steps of the foregoing method embodiments are implemented. The computer program includes computer program code, and the computer program code may be in a form of source code, object code, or an executable file, some intermediate forms, or the like. The non-volatile readable medium may include: any entity or apparatus capable of carrying the computer-readable instruction code, a recording medium, a USB flash drive, a removable hard disk, a magnetic disk, an optical disc, a computer memory, a read-only memory (ROM), or the like.

It may be understood that division of modules described above is only division of logical functions. Other division manners may be available in actual embodiments. In addition, function modules in the embodiments of this application may be integrated into a same processing unit, or each of the modules may exist alone physically, or two or more modules are integrated into a same unit. The integrated module may be implemented in a form of hardware, or may be implemented in a form of hardware and a software functional module.

For a person skilled in the art, it is self-evident that this application is not limited to the details of the foregoing embodiments, and this application may be implemented in other specific forms without departing from the spirit or basic characteristics of this application. Therefore, viewed from any perspective, the foregoing embodiments of this application should be considered to be an example and non-restrictiveness. The scope of this application is defined by the appended claims other than the foregoing descriptions, and therefore, all changes intended to fall within the meanings and the scope of the equivalent important documents of the claims are included in this application.

## Claims

1. A cathode protection method in a battery cycle, **characterized in that** comprising:
obtaining cathode polarization impedances of a battery at different states of charge (SOC) in an n^{th} charge and discharge cycle, wherein n is an integer greater than or equal to 0;
obtaining cathode open-circuit voltages of the battery at the different states of charge and a cathode limit potential of the battery; and
calculating maximum charge currents of the battery at the different states of charge in the n^{th} charge and discharge cycle based on the cathode open-circuit voltages, the cathode limit potential, and the cathode polarization impedances.

2. The cathode protection method according to claim 1, **characterized in that** the step of obtaining cathode polarization impedances of a battery at different states of charge in an n^{th} charge and discharge cycle comprises:
obtaining anode polarization impedances of the battery at the different states of charge;
obtaining battery polarization impedances of the battery at the different states of charge in the n^{th} charge and discharge cycle; and
calculating the cathode polarization impedances of the battery at the different states of charge in the n^{th} charge and discharge cycle based on the battery polarization impedances and the anode polarization impedances.

3. The cathode protection method according to claim 2, **characterized in that** the step of obtaining anode polarization impedances of the battery at the different states of charge comprises:
obtaining a state of charge (SOC)-open-circuit voltage (OCV) correspondence of an anode of the battery;
discharging the battery by using a preset current, and obtaining a discharge curve of the anode of the battery; and
obtaining the anode polarization impedances based on the SOC-OCV correspondence of the anode and the discharge curve of the anode.

4. The cathode protection method according to claim 3, **characterized in that** the step of obtaining the anode polarization impedances based on the SOC-OCV correspondence of the anode and the discharge curve of the anode comprises:
a first processing step: performing normalization processing on the discharge curve of the anode based on the SOC-OCV correspondence of the anode;
a first obtaining step: separately obtaining an anode open-circuit voltage and an anode voltage at a specific state of charge based on the SOC-OCV correspondence of the anode and a normalized discharge curve of the anode;
a first calculation step: calculating an anode polarization impedance at the state of charge based on the anode open-circuit voltage and the anode voltage, wherein the anode polarization impedance is equal to a difference, obtained by subtracting the anode voltage from the anode open-circuit voltage, divided by the preset current; and
a first repetition step: changing the state of charge, and repeatedly performing the first obtaining step to the first repetition step to obtain the anode polarization impedances of the battery at the different states of charge.

5. The cathode protection method according to claim 2, **characterized in that** the step of obtaining battery polarization impedances of the battery at the different states of charge in the n^{th} charge and discharge cycle comprises:
obtaining a state of charge (SOC)-open-circuit voltage (OCV) correspondence of the battery;
discharging the battery by using a preset current, and obtaining a discharge curve of the battery in the n^{th} charge and discharge cycle; and
obtaining the battery polarization impedances of the battery at the different states of charge in the n^{th} charge and discharge cycle based on the SOC-OCV correspondence and the discharge curve of the battery.

6. The cathode protection method according to claim 5, **characterized in that** the step of obtaining the battery polarization impedances of the battery at the different states of charge in the n^{th} charge and discharge cycle based on the SOC-OCV correspondence and the discharge curve of the battery comprises:
a second processing step: performing normalization processing on the discharge curve of the battery based on the SOC-OCV correspondence of the battery;
a second obtaining step: separately obtaining a battery open-circuit voltage and a battery voltage at a specific state of charge based on the SOC-OCV correspondence and a normalized discharge curve of the battery;
a second calculation step: calculating a battery polarization impedance based on the battery open-circuit voltage and the battery voltage, wherein the battery polarization impedance is equal to a difference, obtained by subtracting the battery voltage from the battery open-circuit voltage, divided by the preset current; and
a second repetition step: changing the state of charge, and repeatedly performing the second obtaining step to the second repetition step to obtain the battery polarization impedances of the battery at the different states of charge in the n^{th} charge and discharge cycle.

7. The cathode protection method according to claim 1, **characterized in that** the step of calculating the cathode polarization impedances of the battery at the different states of charge in the n^{th} charge and discharge cycle based on the battery polarization impedances and the anode polarization impedances comprises:
a first obtaining step: obtaining an anode polarization impedance of the battery at a specific state of charge;
a second obtaining step: obtaining a battery polarization impedance of the battery at the state of charge in the n^{th} charge and discharge cycle;
a third calculation step: calculating a cathode polarization impedance by subtracting the anode polarization impedance from the battery polarization impedance; and
a third repetition step: changing the state of charge, and repeatedly performing the first obtaining step to the third repetition step to obtain the cathode polarization impedances of the battery at the different states of charge in the n^{th} charge and discharge cycle.

8. The cathode protection method according to claim 1, **characterized in that** the step of calculating maximum charge currents of the battery at the different states of charge in the n^{th} charge and discharge cycle based on the cathode open-circuit voltages, the cathode limit potential, and the cathode polarization impedances comprises:
obtaining a cathode polarization impedance R_{c} of the battery at a specific state of charge in the n^{th} charge and discharge cycle;
obtaining a cathode open-circuit voltage OCV_{c} of the battery at the state of charge;
calculating a maximum charge current I of the battery at the state of charge in the n^{th} charge and discharge cycle; and
changing the state of charge, and repeatedly performing the foregoing steps to obtain the maximum charge currents of the battery at the different states of charge in the n^{th} charge and discharge cycle.

9. The cathode protection method according to claim 8, **characterized in that** the maximum charge current I of the battery at the state of charge in the n^{th} charge and discharge cycle is calculated by using the following formula: I = (U_{L} - OCV_{c})/R_{c}, wherein U_{L} is the cathode limit potential.

10. A cathode protection apparatus, **characterized in that** comprising:
a battery; and
a processor, configured to perform the cathode protection method according to any one of claims 1 to 9.

11. A storage medium, storing at least one computer instruction, **characterized in that** the instruction is loaded by a processor and is used to perform the cathode protection method according to any one of claims 1 to 9.
